**Europäisches Patentamt**

**European Patent Office**

**Office européen des brevets**

(11) Veröffentlichungsnummer: **0 003 754**
**B1**

# EUROPÄISCHE PATENTSCHRIFT

(45) Veröffentlichungstag der Patentschrift: **29.07.81**

(21) Anmeldenummer: **79100250.4**

(22) Anmeldetag: **29.01.79**

(51) Int. Cl.³: **H 04 L 13/18, H 03 F 3/45**

(54) **Empfangseinrichtung für gleichstromfreie Datensignale.**

(30) Priorität: **17.02.78 DE 2806850**

(43) Veröffentlichungstag der Anmeldung:
**05.09.79 Patentblatt 79/18**

(45) Bekanntmachung des Hinweises auf die Patenterteilung:
**29.07.81 Patentblatt 81/30**

(84) Benannte Vertragsstaaten:
**BE CH FR IT NL**

(56) Entgegenhaltungen:
**DE - A - 2 148 685**
**DE - B - 1 949 153**
**DE - B - 2 714 215**
**FR - A - 2 269 249**

**ELEKTRONIK, Band 16, Nr. 10, 1967,**
**München,**
**TIETZE: "MOS-FET-Elektrometerver-**
**stärker mit geschütztem Eingang",**
**Seiten 313 - 316**

(73) Patentinhaber: **SIEMENS AKTIENGESELLSCHAFT**
**Berlin und München**
**Postfach 22 02 61**
**D-8000 München 22 (DE)**

(72) Erfinder: **Harenberg, Jürgen**
**Schusterstraße 15**
**D-8000 Munchen 71 (DE)**

### Empfangseinrichtung für gleichstromfreie Datensignale

Die Erfindung bezieht sich auf eine Empfangseinrichtung für gleichstromfreie Datensignale mit einem primärseitig an eine Übertrangungsleitung gekoppelten Übertrager, dessen Sekundärwicklungsanschlüsse über Verbindungszweige an die Eingangsanschlüsse eines Differenzoperationsverstärkers angeschlossen sind.

Wickelt man den Datenverkehr zwischen den Datenstaionen über Zweidrahtleitungen, wie sie z.B. Telefonleitungen darstellen, ab, so ist es bekannt, die übertragenen Signale gleichstromfrei mit dem sogenannten Coded-Diphase-Verfahren zu übertragen. Die Signale werden dabei in einem festen Zeichenrahmen bitseriell mit einer Datenrate von bis zu 20.000 Zeichen je Sekunde übertragen. Da das übertragene Signal gleichstromfrei ist, ist es möglich, eine Empfangseinrichtung mit Hilfe von Übertragern potentialfrei anzukoppeln und erdsymmetrisch zu betreiben.

Aufgabe der Erfindung ist es, für eine Datenübertragungsstrecke, bei der Datensignale gleichstromfrei übertragen werden, eine Empfangseinrichtung bereit zu stellen, die einerseits eine große Eingangsempfindlichkeit aufweist, andererseits aber unempfindlich ist gegen Störeinflüsse auf der Übertragungsleitung.

Diese Aufgabe wird gemäß der Erfindung dadurch gelöst, daß eine erste Kapazität im Verbindungszweig zwischen dem zweiten Sekundärwicklungsanschluß und dem invertierenden Eingang des Operationsverstärkers liegt, daß eine zweite Kapazität zwischen dem Erdpotential einer Spannungsversorgung und dem zweiten Sekundärwicklungsanschluß angeordnet ist, und daß zur Kompensation der Offsetspannung ein den Ausgang des Operationsverstärkers auf den invertierenden Eingang rückkoppelnder Widerstand vorgesehen ist.

Bei einer vorteilhaften Ausführungsform der Erfindung ist im Verbindungszweig zwischen dem ersten Sekundärwicklungsanschluß und dem nichtinvertierenden Eingang des Differenzverstärkers ein Begrenzungswiderstand angeordnet, wobei der Ausgang des Operationsverstärkers mit dem nichtinvertierenden Eingang über einen weiteren, in Verbindung mit dem Begrenzungswiderstand eine Schalthysterese hervorrufenden Widerstand verknüpft ist.

Neben der hohen Eingangsempfindlichkeit ist die Empfangseinrichtung insbesondere unempfindlich gegen Störeinflüsse auf der Übertragungsleitung. Eine am Operationsverstärker auftretende Offsetspannung wird durch besondere Maßnahmen automatisch unterdrückt und ausgeregelt. Trotz dieser Ausregelung steht für das am Eingang anliegende gleichstromfreie Datensignal die maximale Verstärkung des Operationsverstärkers zur Verfügung.

Ausführungsformen der Erfindung sind in den Zeichnungen dargestellt und werden im Folgenden beispielsweise näher beschrieben. Es zeigen

Fig. 1 ein Blockschaltbild einer Datenübertragungsstrecke mit der erfindungsgemäßen Empfangseinrichtung und.

Fig. 2 ein Schaltbild der erfindungsgemäßen Empfangseinrichtung.

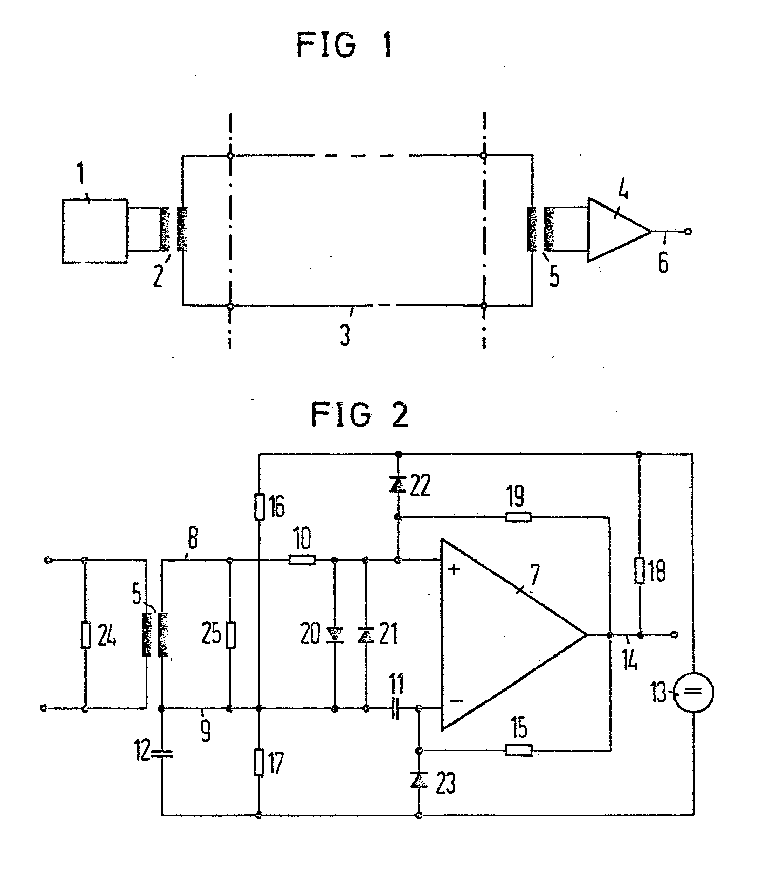

Die in der Fig. 1 dargestellte Datenübertragungsstrecke besteht aus einem Datensender 1, der über einen Übertrager 2 auf als Zweidrahtleitungen ausgebildete Übertragungsleitungen 3 Daten überträgt. Die Datensignale sind dabei im sogenannten Coded-Diphase-Verfahren kodiert und sind gleichstromfrei. Empfangsseitig ist die erfindungsgemäße Empfangseinrichtung 4 über einen weiteren Übertrager 5 an die Übertragungsleitungen 3 potentialfrei angekoppelt. Die Empfangseinrichtung hat dabei die Aufgabe, die über die Übertragungsleitungen 3 ankommenden Datensignale mit geringem Sendepegel ab einigen Millivolt zu verstärken. die verstärkten und regenerierten Datensignale werden dann über den Ausgang 6, z.B. einer Datensichtstation zugeführt.

Die in der Fig. 2 dargestellte erfindungsgemäße Empfangseinrichtung besteht im wesentlichen aus dem Übertrager 5, der primärseitig an die Übertragungsleitungen 3 gekoppelt ist und einem sekundärseitig dem Übertrager 5 nachgeschalteten Operationsverstärker 7. Die zu verstärkende, primärseitig am Übertrager 5 anliegende Eingangswechselspannung induziert im Übertrager 5 eine analoge Wechselspannung. Diese Wechselspannung kann über einen ersten und zweiten Sekundärwicklungsanschluß 8, 9 abgegriffen werden. Der erste Sekundärwicklungsanschluß 8 steht dabei über einem Begrenzungswiderstand 10 mit dem nicht invertierenden Eingang des Operationsverstärkers 7 in Verbindung. Der zweite Sekundärwicklungsanschluß 9 liegt über eine Kapazität 11 an dem invertierenden Eingang des Operationsverstärkers 7 an. Außerdem ist der zweite Sekundärwicklungsanschluß 9 über einen weiteren Kondensator 12 mit dem Erdpotential einer Spannungsquelle 13 verknüpft.

Der Operationsverstärker 7 ist nun durch äußerde Maßnahmen so beschaltet, daß er einerseits die im Operationsverstärker auftretende Offsetspannung infolge Temperaturdrift etc. unterdrückt, andererseits aber für die zu verstärkende Wechselspannung eine hohe Eingangsempfindlichkeit und hohe Verstärkung aufweist. Zu diesem Zwecke ist der Ausgang 14 über einen Widerstand 15 auf seinen invertierenden Eingang gegengekoppelt. Durch diese Schaltungsmaßnahme, die einer Spannungsfolgerbeschaltung entspricht, wird die Ausgangsspannung am Ausgang des Operationsverstärkers 14 auf den Pegel der am nicht invertierenden Eingang des Operationsverstärkers 7 anliegende Spannung ausgeregelt. Dieser Pegel, auf dem die Ausgangsspannung am Ausgang 14 geregelt wird, ist durch einen Spannungsteiler aus den Widerständen 16 und 17 bestimmt und liegt etwa auf der Hälfte der Versorgungsspannung 13. Die Offsetspannung wird dadurch mit ausgeregelt und bleibt somit außer Einfluß.

Die Kondensatoren 11 und 12, bilden wechselspannungsmäßig gesehen einen Kurzschluß. Dadurch liegt hinsichtlich der zu verstärkenden Datensignale der invertierende Eingang des Operationsverstärkers 7 auf Nullpotential, womit die Gegenkopplung über den Widerstand 15 außer Kraft gesetzt ist. Wechselspannungsmäßig ist also der Verstärker 7 nicht gegengekoppelt, hat also seine maximale Verstärkung. Bei normaler Empfangsspannung geht die Ausgangsspannung in Begrenzung, womit am Ausgang 14 ein annähernd rechteckförmiges Ausgangssignal abgegriffen werden kann. Der Widerstand 18 bildet dabei den Arbeitswiderstand des Operationsverstärkers 7.

Der Ausgang des Operationsverstärkers 14 ist weiterhin über einen Widerstand 19, der sehr hochohmig ist (ca. 150 K), auf seinen nicht invertierenden Eingang mitgekoppelt. In Verbindung mit dem Begrenzungswiderstand 10, der nur ungefähr einen Widerstandswert von 220 Ohm aufweist, wird eine Hysterese im Verhalten des Verstärkers erreicht. Diese Hysterese ist so bemessen, daß mögliche kleine Störamplituden, die z.B. durch Rauschen am Eingang auftreten können, am Ausgang keine Wirkung hervorrufen. Der Widerstand 10 dient zusätzlich noch zur Strombegrenzung von zwei, die Verbindungszweige zwischen den sekundarwichlungsanschlüsse 8 und den Eingangsanschlüsse des Operationsverstärkers 7, verknüpfende, mit gegenläufiger Durchlaßrichtung angeordnete Dioden 20, 21, beim Auftreten hoher induzierter Spannungen in der Übertragungsleitung 3.

Mit Hilfe von weiteren zwei, die Eingänge des Operationsverstärkers mit den Ausgängen der Spannungsversorgung verknüpfenden Schutzdioden 22 und 23, werden evtl. in den Verbindungszweigen durch Koppelkapazität des Übertragers auftetende hohe Spannungsspitzen abgeleitet, ehe sie sich im Operationsverstärker 7 schädlich bemerkbar machen können.

Die primär-und sekundärseitig angeordneten Widerstände 24 und 25 bilden die Abschlußwiderstände der Übertragungsleitung 3.

Die gesamte Empfangseinrichtung weist eine große Eingangsempfindlichkeit auf und ist trotzdem unempfindlich gegen Störeinflüsse auf der Übertragungsleitung 3.

Bezugszeichenliste

1 Datensender

2 Übertrager

3 Übertragungsleitung

4 Empfangseinrichtung

5 Übertrager

6 Ausgang

7 Operationsverstärker

8 Erster sekundärseitiger Anschlußzweig

9 Zweiter sekundärseitiger Anschlußzweig

10 Begrenzungswiderstand

11 Kapazität

12 Kondensator

13 Spannungsquelle

14 Ausgang

15 Widerstand

16 Spannungsteiler (Widerstände)

17 „

18 Widerstand

19 „

20 Dioden

21 „

22 „

23 „

24 Primärseitiger Widerstand

25 Sekundärseitiger Widerstand

**Patentansprüche**

1. Empfangseinrichtung für gleichstromfreie Datensignale mit einem primärseitig an eine Übertragungsleitung gekoppelten Übertrager (5), dessen Sekundärwicklungsanschlüsse (8, 9) über Verbindungszweige an die Eingangsanschlüsse eines Differenzoperationsverstärkers (7) angeschlossen sind, dadurch gekennzeichnet, daß eine erste Kapazität (11) im Verbindungszweig zwischen dem zweiten Sekundärwicklungsanschluß (9) und dem invertierenden Eingang des Operationsverstärkers (7) liegt, daß eine zweite Kapazität (12) zwischen dem zweiten Sekundärwicklungsanschluß (9) und Erdpotential einer Spannungsversorgung (13) geschaltet ist, und daß zur Kompensation der Offsetspannung ein den Ausgang des Operationsverstärkers (7) auf den invertierenden Eingang rückkoppelnder Widerstand (15) vorgesehen ist.

2. Empfangseinrichtung nach Anspruch 1, dadurch gekennzeichnet, daß ein Begrenzungswiderstand (10) im Verbindungszweig zwischen dem ersten Sekundärwicklungsanschluß (8) und dem nichtinvertierenden Eingang des Differenzverstärkers (7) liegt, wobei der Ausgang des Operationsverstärkers (7) mit dem nichtinvertierenden Eingang des Operationsverstärkers über einen weiteren, in Verbindung mit dem Begrenzungswiderstand (10) eine Schalthysterese hervorrufenden Widerstand (19) verknüpft ist.

3. Empfangseinrichtung nach Anspruch 1 oder 2, dadurch gekennzeichnet, daß die Eingänge des Operationsverstärkers (7) mit den Ausgängen der Spannungsversorgung (13) über Schutzdioden (22, 23) verknüpft sind.

4. Empfangseinrichtung nach einem der Ansprüche 1 bis 3, dadurch gekennzeichnet, daß zwischen den Verbindungszweigen, die zwischen den Sekundärwicklungsanschlüssen (8, 9) und den Eingangsanschlüssen des Differenzverstärkers (7) liegen, zwei Dioden mit gegenlaufiger Durchlaßrichtung angeordnet sind.

5. Empfangseinrichtung nach einem der vorhergehenden Ansprüche, dadurch gekennzeichnet, daß parallel zur Spannungsversorgung (13) ein Spannungsteiler aus Widerständen (16, 17) angeordnet ist, deren Verbingungspunkt mit dem zweiten Sekundärwicklungsanschluß (9) verbunden ist.

## Claims

1. A receiving device for data signals having no direct current component, comprising a transformer having its primary (5) connected to a transmission line and its secondary winding terminals (8, 9) connected via connecting paths to the input terminals of a differential operational amplifier (7), characterised in that a first capacitor (11) is provided in the connecting path between the second secondary winding terminal (9) and the inverting input of the operational amplifier (7), a second capacitor (12) is connected between the second secondary winding terminal (9) and an earth potential point of a voltage supply unit (13), and compensation of the offset voltage is provided by a feedback resistor (15) from the output of the operational amplifier (7) to the inverting input.

2. A receiving device as claimed in Claim 1, characterised in that a limiting resistor (10) is arranged in the connecting path between the first secondary winding terminal (8) and the non-inverting input of the differential amplifier (7), and the output of the operational amplifier (7) is connected to its non-inverting input via a further resistor (19) which in connection acts together with the limiting resistor (10) to cause a switching hysteresis.

3. A receiving device as claimed in Claim 1 or 2, characterised in that the inputs of the operational amplifier (7) are connected via protective diodes (22, 23) to the outputs of the voltage supply unit (13).

4. A receiving device as claimed in one of Claims 1 to 3, characterised in that two oppositely poled diodes are connected between the connecting paths which are arranged between the secondary winding terminals (8, 9) and the input terminals of the difference amplifier (7).

5. A receiving device as claimed in one of the preceding Claims, characterised in that there is arranged in parallel to the voltage supply unit (13) a voltage divider composed of resistors (16, 17) whose junction is connected to the second secondary winding terminal (9).

## Revendications

1. Dispositif de réception pour des signaux de données sans composante de courant continu, comportant un transformateur (5) accouplé du côté primaire à une ligne de transmission et dont les bornes (8, 9) de l'enroulement secondaire sont raccordées par l'intermédiaire de branches de liaison aux bornes d'entrée d'un amplificateur opérational différentiel (7), caractérisé par le fait qu'un premier condensateur (11) est présent entre la seconde borne (9) de l'enroulement secondaire et l'entrée inverseuse de l'amplificateur opérationnel (7), qu'un second condensateur (12) est monté entre la seconde borne (9) de l'enroulement secondaire et le potentiel de terre d'une alimentation en tension (13), et que pour réaliser la compensation de la tension de décalage il est prévu une résistance (15) couplant par réaction la sortie de l'amplificateur opérationnel (7) à l'entrée inverseuse.

2. Dispositif de réception suivant la revendication 1, caractérisé par le fait qu'une résistance de limitation (10) est située dans la branche de liaison entre la première borne (8) de l'enroulement secondaire et l'entrée non inverseuse de l'amplificateur différentiel (7), la sortie de ce dernier étant reliée à l'entrée non inverseuse de l'amplificateur opérationnel par l'intermédiaire d'une autre résistance (19) créant, en liaison avec la résistance de limitation (10), une hystérésis de commutation.

3. Dispositif de réception selon la revendication 1 ou 2, caractérisé par le fait que les entrées de l'amplificateur opérationnel (7) sont reliées aux sorties de l'alimentation en tension (13) par l'intermédiaire de diodes de protection (22, 23).

4. Dispositif de réception selon l'une des revendications 1 à 3, caractérisé par le fait qu' entre les branches de liaison, qui sont situées entre les bornes (8, 9) de l'enroulement secondaire et les bornes de l'entrée de l'amplificateur différentiel (7), se trouvent disposées deux diodes dont les sens passants sont opposés.

5. Dispositif de réception selon l'une des revendications précédentes, caractérisé par le fait qu'en parallèle avec l'alimentation en tension (13) est disposé un diviseur de tension formé de résistances (16, 17) et dont le point de liaison est raccordé à la seconde borne (9) de l'enroulement secondaire.

# FIG 1

# FIG 2